# EUROPEAN PATENT SPECIFICATION

(11) **EP 4 451 649 B1**
(45) Date of publication and mention of the grant of the patent: **08.04.2026**
(21) Application number: 22909469.3
(22) Date of filing: 18.10.2022
(51) Int. Cl.: H04W 4/24, H04L 9/40, H04L 67/02, H04L 12/14, H04M 15/00

(54) **SERVICE PROCESSING METHOD AND SYSTEM, AND COMPUTER-READABLE STORAGE MEDIUM**
DIENSTVERARBEITUNGSVERFAHREN UND -SYSTEM SOWIE COMPUTERLESBARES SPEICHERMEDIUM
PROCÉDÉ ET SYSTÈME DE TRAITEMENT DE SERVICE, ET SUPPORT DE STOCKAGE LISIBLE PAR ORDINATEUR

(30) Priority: 22.12.2021 CN 202111578549
(43) Date of publication of application: 23.10.2024
(73) Proprietor: ZTE Corporation, Shenzhen, Guangdong 518057 (CN)
(72) Inventor: NI, Chunhua, Shenzhen, Guangdong 518057 (CN); WANG, Wei, Shenzhen, Guangdong 518057 (CN)
(74) Representative: Savi, Massimiliano
(86) International application number: PCT/CN2022/125988
(87) International publication number: WO 2023/116151

(56) References cited:
- WO-A1-2020/135848
- CN-A- 101 754 163
- CN-A- 103 269 479
- CN-A- 104 780 519
- CN-A- 106 412 866
- CN-A- 108 243 015
- CN-A- 111 224 831
- CN-A- 112 118 565
- CN-A- 112 291 724
- CN-A- 113 055 535
- CN-A- 113 518 349
- GSMA OPG OBSERVER: "Draft GSMA OPG.02 Operator Platform: Requirements and Architecture", vol. ISG MEC Multi-access Edge Computing, 9 June 2021 (2021-06-09), pages 1 - 120, XP014406661, Retrieved from the Internet <URL:ftp://docbox.etsi.org/ISG/MEC/05-Contributions/2021/MEC(21)000284_Draft_GSMA_OPG_02_Operator_Platform__Requirements_and_Archit.zip OP PRD CR_final.pdf> [retrieved on 20210609]
- ERICSSON: "New WID on CT aspects of Integration of GBA into SBA", vol. CT WG4, no. E-Meeting; 20210125 - 20210129, 15 January 2021 (2021-01-15), XP051973215, Retrieved from the Internet <URL:https://ftp.3gpp.org/tsg_ct/WG4_protocollars_ex-CN4/TSGCT4_101e-bis_meeting/Docs/C4-210049.zip C4-210049-GBA-5G-CT-WID.docx> [retrieved on 20210115]
- "3rd Generation Partnership Project; Technical Specification Group Services and System Aspects; Telecommunication management; Charging management; 5G system; Services, operations and procedures of charging using Service Based Interface (SBI) (Release 15)", 3GPP STANDARD; TECHNICAL SPECIFICATION; 3GPP TS 32.290, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V1.0.0, 5 June 2018 (2018-06-05), pages 1 - 20, XP051451571

## Description

### TECHNICAL FIELD

The present disclosure relates to the technical field of data processing, and in particular, to a service processing method and system, and a computer-readable storage medium.

### BACKGROUND

With the development of mobile Internet, conventional short messaging services have been upgraded to rich media messaging services, and 5th Generation (5G) message services have also been launched. Users can receive and send multimedia and messages in various formats such as text, pictures, audio, and video through 5G messages, to realize service search, discovery, interaction, payment, and other services. Therefore, with the continuous promotion of 5G message services, the types of services are becoming more and more abundant. In related technologies, the identification of services corresponding to 5G messages has limitations, and it is difficult to monitor 5G messages of various service types, affecting the accuracy of processing 5G messages of different service types.

CN 113518349A discloses a service management method, a device, a system and a storage medium. The service management method includes: receiving authentication request information of a Generic Bootstrapping Architecture (GBA) sent by a Network Application Function (NAF) network element; and performing authorization verification on the GBA access right of the application server based on the application service identification. The authentication request information includes an application service identifier.

GSMA OPG OBSERVER, "Draft GSMA OPG.02 Operator Platform: Requirements and Architecture", provides a formal set of requirements and architecture for the operator Platform based on the proposals provided in OPG.01 that have been updated based feedback from SDOs and open-source communities and that have been extended to cover areas like edge node sharing, roaming and containers.

### SUMMARY

The following is a summary of the subject matter set forth in this description. This summary is not intended to limit the scope of protection of the claims.

The features of the service processing method and system, and the computer-readable storage medium according to embodiments of the present disclosure are set out in the appended set of claims.

Additional features and advantages of the present disclosure will be set forth in the description which follows, and in part will be obvious from the description, or may be learned by the practice of the present disclosure. The objects and other advantages of the present disclosure can be realized and obtained by the structures particularly pointed out in the description, claims and drawings.

### BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, and are not intended to limit the technical schemes of the present disclosure.
FIG. 1 is a schematic diagram of an application scenario of a service processing method according to an embodiment of the present disclosure;
FIG. 2 is a flowchart of a service processing method according to an embodiment of the present disclosure;
FIG. 3 is a schematic diagram of a specific implementation process of steps that the method further includes before S100 in FIG. 2;
FIG. 4 is a schematic diagram of a specific implementation process of S500 in FIG. 3;
FIG. 5 is a schematic flowchart of integration of a GBA authentication service and a file transfer service according to an embodiment of the present disclosure;
FIG. 6 is a schematic flowchart of outputting bills by main and auxiliary processes in a GBA authentication process according to an embodiment of the present disclosure;
FIG. 7 is a schematic diagram of a specific implementation process of S200 in FIG. 2;
FIG. 8 is a schematic diagram of a specific implementation process of S530 in FIG. 4 or S210 in FIG. 7;
FIG. 9 is a schematic diagram of a specific implementation process of S200 in FIG. 2;
FIG. 10 is a schematic diagram of a specific implementation process of S200 in FIG. 2;
FIG. 11 is a flowchart of a service processing method according to another embodiment of the present disclosure; and
FIG. 12 is a schematic structural diagram of a service processing system according to an embodiment of the present disclosure.

### DETAILED DESCRIPTION

To make the objects, technical schemes, and advantages of the present disclosure clear, the present disclosure is described in further detail in conjunction with accompanying drawings and examples. It should be understood that the specific embodiments described herein are merely used for illustrating the present disclosure, and are not intended to limit the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order
The present disclosure provides a service processing method. In the method, a first service request sent by a terminal device is acquired over an HTTP protocol, where the terminal device has passed a GBA authentication, and the first service request sent is a 5G message. According to an HTTP protocol content carried in the first service request, different HTTP service types of the first service request are identified. As such, the monitoring of the service type of the 5G message is realized, and a corresponding 5G message service bill can be sent to the terminal device according to the HTTP service type, thereby improving the accuracy of processing 5G messages of different service types.

For ease of understanding, application scenarios of the service processing method provided in the embodiments of the present disclosure will be described below in conjunction with the accompanying drawings.

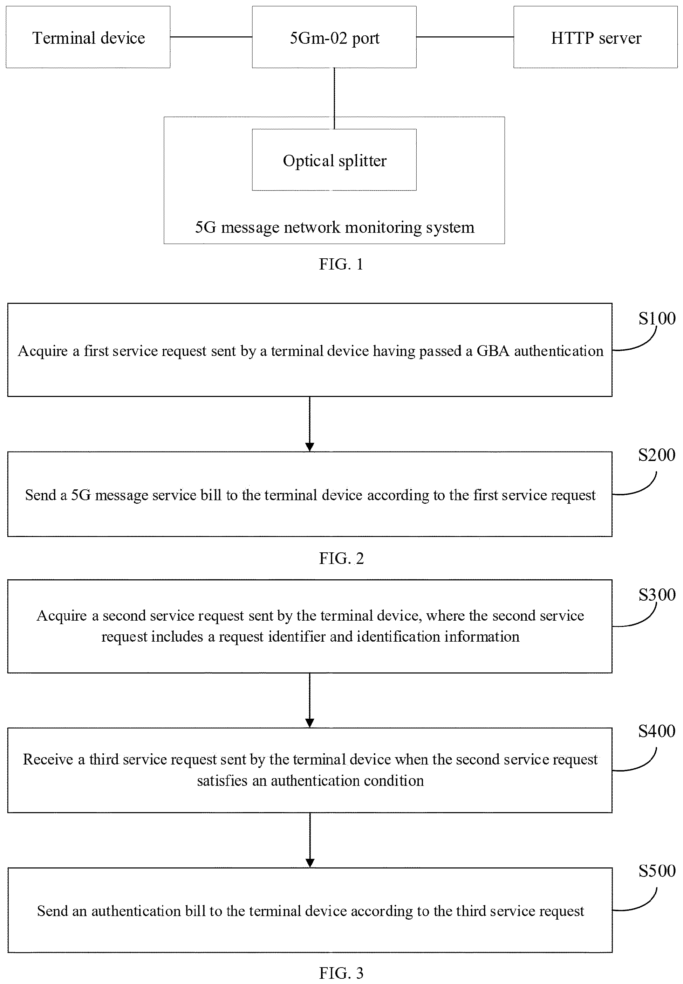

FIG. 1 shows an application scenario of a service processing method, which may be applied to a 5G message network monitoring system. The 5G message network monitoring system may be arranged between an HTTP server and a terminal device.

A 5G message is constructed according to a general standard specified by the Global System for Mobile Communications Association (GSMA) for the Rich Communication Suite (RCS). A user can receive and send multimedia and messages in various formats such as text, pictures, audio, and video through a message entrance on the terminal device without having to download a client.

In the 5G message network monitoring system, a service acquisition point is arranged between the HTTP server and the terminal device. The service acquisition point may be an acquisition point of a Deep Packet Inspection (DPI) system in a 5G message network, for example, a 5Gm-02 port, and uses the HTTP protocol to perform file-related operations, such as file uploading and downloading, authentication, verification, etc. The 5G message network monitoring system may acquire a service request sent from a terminal device, analyze an eigenvalue and a protocol behavior in the service request, identify a service type of the service request, and output a corresponding 5G message service bill, to realize the inspection, monitoring, analysis, and service identification of 5G messages.

For the acquisition and parsing of 5G messages, a port imaging is arranged on the acquisition point to copy a 5G message transmitted between the HTTP server and the terminal device into the 5G message network monitoring system, thus acquiring the 5G message transmitted between the HTTP server and the terminal device. In addition, the 5G message network monitoring system may also use an optical splitter to perform optical replication on the physical layer to acquire 5G messages. The use of mirroring or the optical splitter to acquire data has no impact on the message transmission service between the HTTP server and the terminal device even if the 5G message network monitoring system fails, ensuring high network stability.

The 5G message network monitoring system and application scenarios described in the embodiments of the present disclosure are for the purpose of illustrating the technical schemes of the embodiments of the present disclosure more clearly, and do not constitute a limitation on the technical schemes provided in the embodiments of the present disclosure. Those having ordinary skills in the art may know that with the evolution of the 5G message network monitoring system and the emergence of new application scenarios, the technical schemes provided in the embodiments of the present disclosure are also applicable to similar technical problems.

Those having ordinary skills in the art may understand that the 5G message network monitoring system shown in FIG. 1 do not constitute a limitation to the embodiments of the present disclosure, and more or fewer components than those shown in the figure may be included, or some components may be combined, or a different component arrangement may be used.

Based on the structure of the above-mentioned 5G message network monitoring system, various embodiments of the service processing method of the present disclosure are proposed.

FIG. 2 is a flowchart of a service processing method according to an embodiment of the present disclosure. The service processing method includes, but not limited to, the following steps.

In a step of S100, a first service request sent by a terminal device having passed a GBA authentication is acquired.

In a step of S200, a 5G message service bill is sent to the terminal device according to the first service request.

It can be understood that to ensure the legitimate use of services, login authentication is required between terminal devices and servers. GBA is a mobile communication network-based, lightweight security infrastructure defined by the 3rd Generation Partnership Project (3GPP). It can provide a unified authentication mechanism for existing and future services, and solve the security authentication problem of services in a consistent way.

When a terminal device that has passed the GBA authentication sends a 5G message, i.e., a first service request, to an HTTP server, a 5G message network monitoring system may acquire the first service request through mirroring or an optical splitter. The first service request corresponds to a service type of a file-related operation, including file uploading, file downloading, authentication, verification, etc. Service requests of different service types carry different HTTP protocol eigenvalues. Therefore, an HTTP protocol eigenvalue in the first service request can be checked and analyzed, and a service type corresponding to the first service request can be identified through HTTP service identification, to improve the integrity of 5G message service identification. As such, a corresponding 5G message service bill and corresponding signaling backtracking can be sent to the terminal device according to each service type, so that services used by the terminal device can be analyzed, which is conducive to the promotion of 5G message services.

Referring to FIG. 3, before S100 in the embodiment shown in FIG. 2, the method further includes, but not limited to, the following steps.

In a step of S300, a second service request sent by the terminal device is acquired, where the second service request includes a request identifier and identification information.

In a step of S400, a third service request sent by the terminal device is received when the second service request satisfies an authentication condition.

In a step of S500, an authentication bill is sent to the terminal device according to the third service request.

The authentication condition is that the request identifier is a first request identifier, and the identification information is a GBA identifier.

It can be understood that login authentication is required between the terminal device and the HTTP server. The authentication/verification process between the terminal device and the HTTP server includes two request-response interactions. When the terminal device fails the authentication/verification, the terminal device needs to send an authentication/verification request and a secondary authentication request to the HTTP server. Because the terminal device and the HTTP server communicate with each other via the HTTP protocol, whether an authentication condition is satisfied may be determined according to an HTTP protocol eigenvalue carried in the authentication/verification request. When no authentication/verification is performed between the terminal device and the HTTP server, the terminal device sends a second service request for authentication/verification. The second service request includes a request identifier and identification information. When the second service request satisfies the authentication condition, i.e., the request identifier in the second service request is the first request identifier and the identification information is the GBA identifier, the third service request sent by the terminal device is received, i.e., the secondary authentication request is received. According to an HTTP protocol eigenvalue carried in the third service request, it is determined whether the terminal device has passed the authentication/verification, and a corresponding authentication bill is sent to the terminal device. The request identifier in the service request may be a request line method, and the first request identifier may be POST, i.e., the first request identifier may be expressed as a method for the terminal device to submit data to the HTTP server, such that the HTTP server creates a new resource or update an existing resource according to the received service request. The identification information in the service request may include field content in the request message. Therefore, when the request line method in the received second service request is POST, and content of a header field User-Agent in the request message carries information "3gpp-gba" as the GBA identifier, it is determined that the second service request satisfies the authentication condition, the third service request is received as a secondary authentication request, and a corresponding authentication bill is sent to the terminal device according to content of the HTTP protocol eigenvalue carried in the third service request. For example, the authentication bill may include a GBA authentication timeout bill and a GBA authentication success bill. When the GBA authentication timeout bill is sent to the terminal device, it may be considered that the GBA authentication/verification of the terminal device fails. When the GBA authentication success bill is sent to the terminal device, it may be considered that the GBA authentication/verification of the terminal device is successful. Therefore, service types of 5G messages can be identified based on the HTTP protocol, to improve the integrity of 5G message service identification, thereby improving the accuracy of processing 5G messages of different service types.

It should be noted that the authentication condition may also include that the identification information in the service request carries authorization information. For example, the identification information carries an Authorization field. When the request method in the service request is POST, and the User-Agent field in the service request contains "3gpp-gba" and carries the Authorization field, it is determined that the service type of the service request is a GBA authentication service.

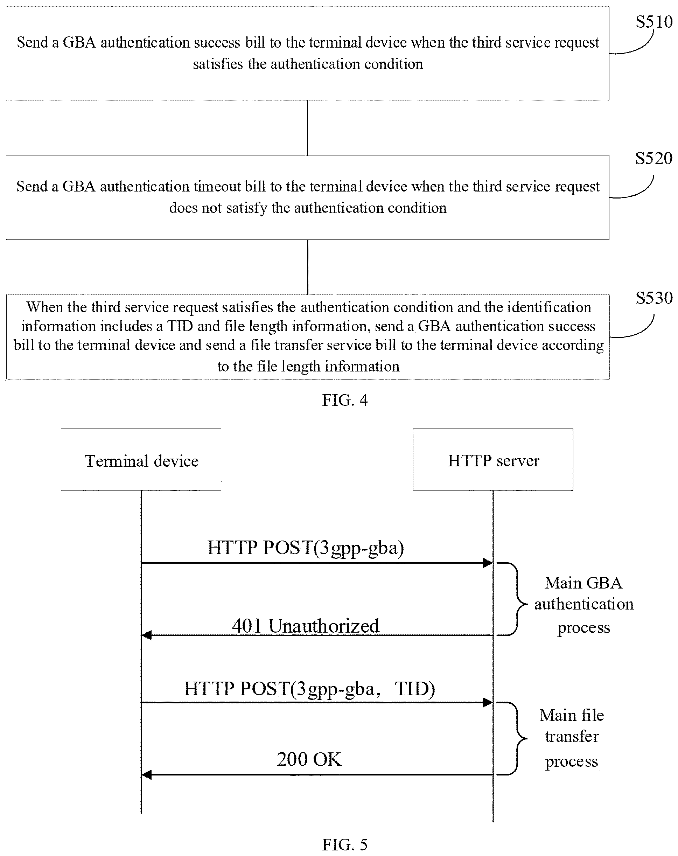

Referring to FIG. 4, S500 in the embodiment shown in FIG. 3 includes, but not limited to, one of the following steps.

In a step of S510, a GBA authentication success bill is sent to the terminal device when the third service request satisfies the authentication condition.
or,
in a step of S520, a GBA authentication timeout bill is sent to the terminal device when the third service request does not satisfy the authentication condition.
   or,
in a step of S530, when the third service request satisfies the authentication condition and the identification information includes a Task Identifier (TID) and file length information, a GBA authentication success bill is sent to the terminal device and a file transfer service bill is sent to the terminal device according to the file length information.

It can be understood that when the request identifier in the third service request is the first request identifier, and the identification information carries the GBA identifier, or the identification information carries the GBA identifier and the authorization information, it is determined that the third service request satisfies the authentication condition. Therefore, when both the second service request and the third service request satisfy the authentication condition, the terminal device is considered to have passed the authentication/verification with the HTTP server, so the GBA authentication success bill is sent to the terminal device. When the third service request satisfies the authentication condition, and the identification information further includes a TID, it is considered that the terminal device has passed the authentication/verification with the HTTP server, and at the same time, initiates a file transfer service request to the HTTP server, i.e., the GBA authentication service and a file transfer service are performed simultaneously. Therefore, a GBA authentication success bill and a file transfer service bill are sent to the terminal device. When the received third service request does not satisfy the authentication condition, it is determined that the authentication/verification between the terminal device and the HTTP server times out, so the GBA authentication timeout bill is sent to the terminal device.

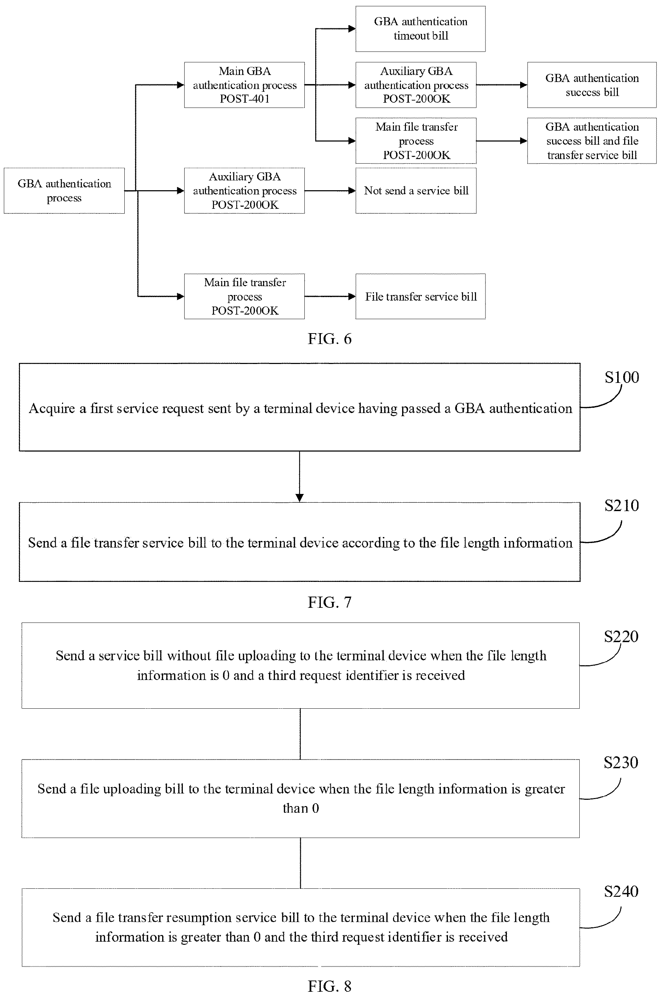

Refer to FIG. 5 and FIG. 6. FIG. 5 is a schematic flowchart of integration of a GBA authentication service and a file transfer service. FIG. 6 is a schematic flowchart of outputting bills by main and auxiliary processes in a GBA authentication process.

It can be understood that a complete GBA authentication service includes two message interactions between the terminal device and the HTTP server. During the second message interaction process, the terminal device may simultaneously send service content to be uploaded and GBA authentication service content to the HTTP server. Therefore, it may be considered that the GBA authentication process may include a main GBA authentication process and an auxiliary GBA authentication process, or may include the main GBA authentication process and a main file transfer process, or may include only the main GBA authentication process. The main GBA authentication process may be characterized as that the second service request satisfies the authentication condition. The auxiliary GBA authentication process may be characterized as that the third service request satisfies the authentication condition and the identification information does not carry the TID. The main file transfer process may be characterized as that the third service request satisfies the authentication condition and the identification information carries the TID. When the GBA authentication process includes only the main GBA authentication process, the GBA authentication timeout bill is sent. When the GBA authentication process includes the main GBA authentication process and the auxiliary GBA authentication process, the GBA authentication success bill is sent. When the GBA authentication process includes the main GBA authentication process and the main file transfer process, the GBA authentication success bill and the file transfer service bill are sent. In addition, when the GBA authentication process includes only the main file transfer process, the file transfer service bill is sent. When the GBA authentication process includes only the auxiliary GBA authentication process, no 5G message service bill is sent.

When a file uploading service request is initiated simultaneously during the GBA authentication service, i.e., when the second service request and the third service request both satisfy the authentication condition and the identification information in the third service request carries a TID, the authentication/verification between the HTTP server and the terminal device is successful and a file uploading service is completed, so a GBA authentication success bill and a file transfer service bill are sent to the terminal device. Therefore, through the use of the main process and the auxiliary process in combination, a case where the GBA authentication service and the file transfer service are performed simultaneously can be identified, thereby improving the integrity of 5G message service identification. In addition, corresponding 5G message service bills are respectively sent in a case where multiple services are performed at the same time, thereby improving the accuracy of processing 5G messages of different service types.

Referring to FIG. 7, S200 in the embodiment shown in FIG. 2 includes, but not limited to, a following step.

In a step of S210, a file transfer service bill is sent to the terminal device according to the file length information.

It can be understood that when the request identifier in the received first service request is the first request identifier, and the identification information carries a TID and file length information, it is considered that the service type of the first service request is a file transfer service, so a file transfer service bill is sent to the terminal device according to the file length information in the first service request. As the file length information varies, the file transfer service bill may include a file uploading bill and a bill without file uploading.

Referring to FIG. 8, S530 in the embodiment shown in FIG. 4 or S210 in the embodiment shown in FIG. 7 includes, but not limited to, one of the following steps.

In a step of S220, a service bill without file uploading is sent to the terminal device when the file length information is 0 and a third request identifier is received.
or,
in a step of S230, a file uploading bill is sent to the terminal device when the file length information is greater than 0.
   or,
in a step of S240, a file transfer resumption service bill is sent to the terminal device when the file length information is greater than 0 and the third request identifier is received.

It can be understood that the file transfer service includes determining whether the terminal device has a file service, a file uploading service, a service without file uploading, or a file transfer resumption service. When the file length information carried in the first service request is 0, it is determined whether the terminal device has a file service, and a service request initiated by the terminal device is re-acquired. When the request identifier in the re-acquired service request is the third request identifier, it is considered that the service type is a service without file uploading, and a service bill without file uploading is sent to the terminal device. The third request identifier may be a PUT request method, and a resource is uploaded to the HTTP server by utilizing the PUT request method. When the file length information carried in the first service request is greater than 0, it is considered that the service type is a file uploading service, so a file uploading bill is sent to the terminal device. When the file length information is greater than 0, and the request identifier carried in the re-acquired service request is the third request identifier, it is considered that the service type is a file transfer resumption service, so a file transfer resumption service bill is sent to the terminal device. When a file transfer service request including identification information carrying a TID is received, a secondary service request sent by the terminal device may be re-acquired. Information carried in the secondary service request is checked based on the HTTP protocol. A specific service type is determined according to the file length information in the file transfer service request and the request identifier in the secondary service request. As such, the integrity and accuracy of 5G message service identification are improved, so that corresponding 5G message service bills can be sent when receiving service requests of different service types, thereby facilitating the analysis and management of the usage statuses of services.

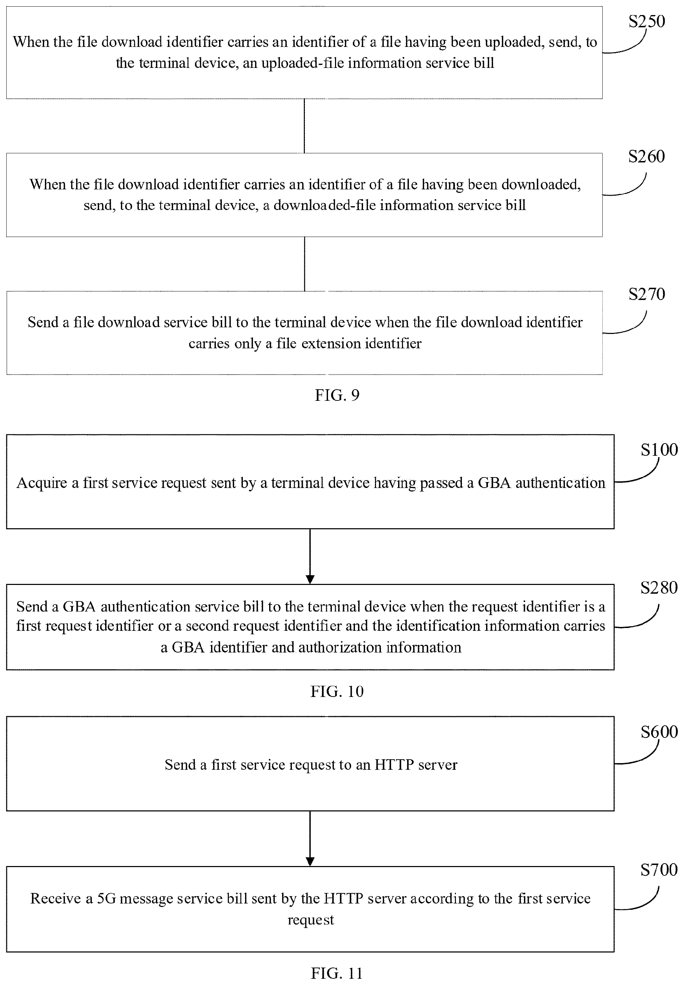

Referring to FIG. 9, S200 in the embodiment shown in FIG. 2 includes, but not limited to, one of the following steps.

In a step of S250, when a file download identifier carries an identifier of a file having been uploaded, an uploaded-file information service bill is sent to the terminal device.
or,
in a step of S260, when the file download identifier carries an identifier of a file having been downloaded, a downloaded-file information service bill is sent to the terminal device.
   or,
in a step of S270, a file download service bill is sent to the terminal device when the file download identifier carries only a file extension identifier.

It can be understood that, the request identifier includes a second request identifier, which may be a GET request method in a request line, i.e., the second request identifier may be expressed as a request method that can request to acquire a resource without any other impact on the server. When the terminal device needs to acquire a resource, such as file information, from the HTTP server, it may send a service request carrying the second request identifier and a file download identifier to the HTTP server. There are a variety of file download identifiers, such as an identifier of a file having been uploaded, an identifier of a file having been downloaded, and a file extension identifier. The identifier of the file having been uploaded may be a get _upload _info identifier in a request line. The identifier of the file having been downloaded may be a get_download_info identifier in a request line. The file extension identifier may be an extension in a File Identifier Descriptor (FID) carried in a request line, such as txt, jpg, wav, etc.

When the first service request includes the second request identifier, and the file download identifier carries an identifier of a file having been uploaded, i.e., the request line contains the get_upload_info identifier, it is considered that the service type is a service of acquiring information of a file having been uploaded, and the terminal device requests to acquire information of a file having been uploaded, so an uploaded-file information service bill is sent to the terminal device. When the file download identifier carries an identifier of a file having been downloaded, i.e., the request line contains the get_download_info identifier, it is considered that the service type is a service of acquiring information of a file having been downloaded, and the terminal device requests to acquire information of a file having been downloaded, so a downloaded-file information service bill is returned to the terminal device. When the file download identifier does not contain an identifier of a file having been uploaded and an identifier of a file having been downloaded and contains only a file extension identifier, i.e., the request line does not contain the get_upload_info identifier and the get_download_info identifier, and the FID of the request line contains a file extension name such as txt, jpg, wav, etc., it is considered that the service type is a file download service, so a file download service bill is sent to the terminal device. A specific file transfer service type is determined according to the request identifier and different types of file download identifiers, such that different service bills can be sent according to different types of downloaded files, thereby improving the integrity of 5G message service identification and facilitating the management and analysis of 5G messages.

Referring to FIG. 10, S200 in the embodiment shown in FIG. 2 includes, but not limited to, a following step.

In a step of S280, a GBA authentication service bill is sent to the terminal device when the request identifier is a first request identifier or a second request identifier and the identification information carries a GBA identifier and authorization information.

It can be understood that during the authentication/verification process between the terminal device and the HTTP server, the terminal device may send an authentication request to the HTTP server through a POST request method or a GET request method. To be specific, when the first service request carries the first request identifier or the second request identifier, and the identification information carries a GBA identifier and authorization information, it is considered that the service type of the service request is a GBA authentication service, so a GBA authentication service bill is sent to the terminal device. In addition, when the received first service request carries the first request identifier or the second request identifier, but does not carry the GBA identifier, it may be considered that the service type of the service request is not a GBA authentication service. The authorization information carried in the identification information may be an Authorization field in the request message. Therefore, when an HTTP request method in a 5G message acquired based on the HTTP protocol is POST or GET, and the User-Agent field in the request message contains "3gpp-gba" and the request message carries the Authorization field, it is considered that the 5G message belongs to the GBA authentication service. According to HTTP protocol eigenvalues in the 5G message, such as the request identifier, the GBA identifier, and the authorization information, the service type of the 5G message can be identified, and a corresponding service bill can be sent according to the service type.

FIG. 11 is a flowchart of a service processing method according to another embodiment of the present disclosure. The service processing method includes, but not limited to, the following steps.

In a step of S600, a first service request is sent to an HTTP server when a terminal device has passed a GBA authentication.

In a step of S700, a 5G message service bill sent by the HTTP server according to the first service request is received.

It can be understood that when the terminal device has passed the GBA authentication, the terminal device may send a first service request to the HTTP server. A 5G message network monitoring system may acquire the first service request through mirroring or an optical splitter, and send the first service request to the HTTP server. After receiving the first service request, the HTTP server checks HTTP protocol eigenvalues carried in the first service request, such as a request identifier and identification information, identify a service type of the first service request, execute a corresponding service process, and return a corresponding 5G message service bill. The 5G message network monitoring system may acquire the 5G message service bill through mirroring or an optical splitter, analyze and manage the 5G message service bill, and then send the 5G message service bill to the terminal device. In addition, the 5G message network monitoring system may acquire and identify the first service request and obtain a corresponding 5G message service bill, or may acquire the 5G message service bill from the HTTP server, and output a 5G message service bill and corresponding signaling backtracking to the terminal device according to the service type of the service request, allowing an operator to analyze the usage of the service by the terminal device.

It should be noted that when the terminal device does not pass the GBA authentication, the terminal device may send a second service request to the HTTP server, and the 5G message network monitoring system may acquire the second service request by copying and send the second service request to the HTTP server. When the second service request satisfies an authentication condition, the HTTP server may return an unauthorized authentication response to the terminal device. When the terminal device receives the unauthorized authentication response, the terminal device sends a third service request to the HTTP server, and the 5G message network monitoring system may further acquire the third service request by copying and send the third service request to the HTTP server. In addition, according to an HTTP protocol eigenvalue carried in the third service request, the 5G message network monitoring system may further determine whether the terminal device has passed the authentication/verification with the HTTP server and whether to execute a file transfer service i.e., identify a service type of the service request. The 5G message network monitoring system may further cooperate with the HTTP server to send a 5G message service bill according to the service type. As such, the identification of the 5G message service based on the HTTP protocol is realized, and a corresponding bill and signaling backtracking can be output according to the service request.

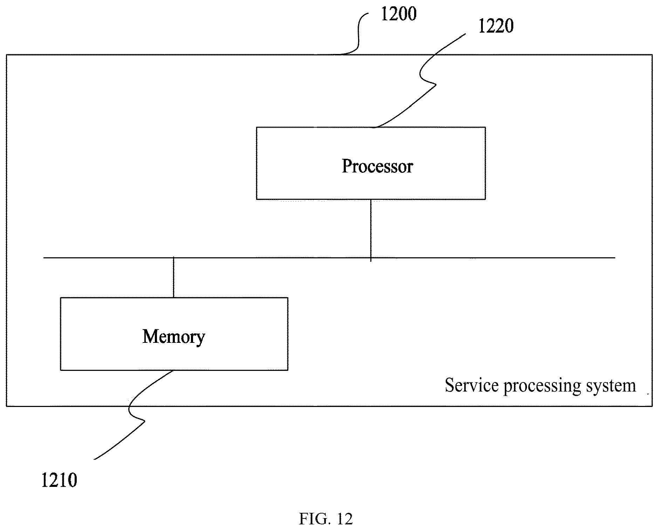

FIG. 12 shows a service processing system 1200 according to an embodiment of the present disclosure. The service processing system 1200 may include a terminal device, an HTTP server, and the 5G message network monitoring system shown in FIG. 1. The service processing system 1200 includes a memory 1210, a processor 1220, and a computer program stored in the memory 1210 and executable by the processor 1220. The computer program, when executed by the processor 1220, causes the processor 1220 to implement the service processing method in the above embodiments.

The memory 1210, as a non-transitory computer-readable storage medium, may be configured for storing a non-transitory software program and a non-transitory computer-executable program, for example, the service processing method in the embodiments of the present disclosure. The processor 1220 runs the non-transitory software program and the non-transitory computer-executable program stored in the memory 1210, to implement the service processing method in the embodiments of the present disclosure.

The memory 1210 may include a program storage area and a data storage area. The program storage area may store an operating system, and an application required by at least one function. The data storage area may store data and the like required for executing the service processing method in the above embodiments. In addition, the memory 1210 may include a high-speed random access memory, and may also include a non-transitory memory, e.g., at least one magnetic disk storage device, flash memory device, or other non-transitory solid-state storage device. It should be noted that the memory 1210 may include memories located remotely from the processor 1220, and the remote memories may be connected to the processor 1220 via a network. Examples of the network include, but not limited to, the Internet, an intranet, a local area network, a mobile communication network, and combinations thereof.

The non-transitory software program and the non-transitory computer-executable program required for implementing the service processing method in the embodiments are stored in the memory which, when executed by one or more processors, cause the one or more processors to implement the service processing method in the embodiments, for example, implement at least one of the method steps S100 to S200 in FIG. 2, the method steps S300 to S500 in FIG. 3, the method steps S510 to S530 in FIG. 4, the method step S210 in FIG. 7, the method steps S220 to S240 in FIG. 8, the method steps S250 to S270 in FIG. 9, the method step S280 in FIG. 10, or the method steps S600 to S700 in FIG. 11.

The present disclosure further provides a computer-readable storage medium, storing a computer-executable instruction which, when executed by a computer, causes the computer to implement the service processing method in the embodiments, for example, implement at least one of the method steps S100 to S200 in FIG. 2, the method steps S300 to S500 in FIG. 3, the method steps S510 to S530 in FIG. 4, the method step S210 in FIG. 7, the method steps S220 to S240 in FIG. 8, the method steps S250 to S270 in FIG. 9, the method step S280 in FIG. 10, or the method steps S600 to S700 in FIG. 11.

The embodiments of the present disclosure include: acquiring a first service request sent by a terminal device having passed a GBA authentication; and sending a 5G message service bill to the terminal device according to the first service request. According to the scheme provided in the embodiments of the present disclosure, a first service request sent by a terminal device is acquired based on the HTTP protocol, i.e., a 5G message sent by a terminal device having passed a GBA authentication is acquired. According to different HTTP protocol contents carried in the first service request, different HTTP service types of the first service request can be identified. As such, the monitoring of 5G messages of various service types is realized, and a corresponding 5G message service bill can be sent to the terminal device according to the HTTP service type, thereby improving the accuracy of processing 5G messages of different service types.

The apparatus embodiments described above are merely examples. The units described as separate components may or may not be physically separated, i.e., they may be located in one place or may be distributed over a plurality of network units. Some or all of the modules may be selected according to actual needs to achieve the objects of the scheme of this embodiment.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and which can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

The embodiments of the present disclosure have been described in detail above with reference to the accompanying drawings, but the present disclosure is not limited to the above embodiments, and various changes may be made within the knowledge of those having ordinary skills in the art without departing from the protection scope of the present disclosure.

## Claims

1. A service processing method, performed by a Hypertext Transfer Protocol, HTTP, server, comprising:
acquiring a first service request sent by a terminal device having passed a General Bootstrapping Architecture, GBA, authentication (S100); and
sending a 5th Generation, 5G, message service bill to the terminal device according to the first service request (S200);
wherein the first service request carries a HTTP protocol eigenvalue based on a service type of the first service request; and
wherein the 5G message service bill is determined based on a service type of the service request identified by the HTTP protocol eigenvalue of the first service request and a protocol behavior in the service request.

2. The service processing method of claim 1, wherein before acquiring a first service request sent by a terminal device having passed a GBA authentication (S100), the method comprises:
acquiring a second service request sent by the terminal device, wherein the second service request comprises a request identifier and identification information (S300);
receiving a third service request sent by the terminal device, in response to the second service request satisfying an authentication condition (S400); and
sending an authentication bill to the terminal device according to the third service request (S500),
wherein the authentication condition is that the request identifier is a first request identifier, and the identification information is a GBA identifier.

3. The service processing method of claim 2, wherein the third service request comprises a request identifier and identification information, and sending an authentication bill to the terminal device according to the third service request (S500) comprises:
sending a GBA authentication success bill to the terminal device in response to the third service request satisfying the authentication condition (S510);
or
sending a GBA authentication timeout bill to the terminal device in response to the third service request not satisfying the authentication condition (S520);
or
in response to the third service request satisfying the authentication condition and the identification information comprising a Task Identifier, TID, and file length information, sending a GBA authentication success bill to the terminal device and sending a file transfer service bill to the terminal device according to the file length information (S530).

4. The service processing method of claim 1, wherein the first service request comprises a request identifier and identification information, and in response to the request identifier being a first request identifier and the identification information carrying a TID and file length information, sending a 5G message service bill to the terminal device according to the first service request (S200) comprises:
sending a file transfer service bill to the terminal device according to the file length information (S210).

5. The service processing method of claim 3 or 4, wherein sending a file transfer service bill to the terminal device according to the file length information (S210) comprises:
sending a service bill without file uploading to the terminal device, in response to the file length information being 0 and receiving a third request identifier (S220);
or
sending a file uploading bill to the terminal device in response to the file length information being greater than 0 (S230);
or
sending a file transfer resumption service bill to the terminal device in response to the file length information being greater than 0 and receiving the third request identifier (S240).

6. The service processing method of claim 1, wherein the first service request comprises a request identifier and identification information, and in response to the request identifier being a second request identifier and the identification information carrying a file download identifier, sending a 5G message service bill to the terminal device according to the first service request (S200) comprises:
in response to the file download identifier carrying an identifier of a file having been uploaded, sending, to the terminal device, an uploaded-file information service bill (S250);
or
in response to the file download identifier carrying an identifier of a file having been downloaded, sending, to the terminal device, a downloaded-file information service bill (S260);
or
sending a file download service bill to the terminal device in response to the file download identifier carrying only a file extension identifier (S270).

7. The service processing method of claim 1, wherein the first service request comprises a request identifier and identification information, and sending a 5G message service bill to the terminal device according to the first service request (S200) comprises:
sending a GBA authentication service bill to the terminal device in response to the request identifier being a first request identifier or a second request identifier and the identification information carrying a GBA identifier and authorization information (S280).

8. A service processing method, performed by a terminal device has passed a Generic Bootstrapping Architecture, GBA, authentication, comprising:
sending a first service request to a Hypertext Transfer Protocol, HTTP, server(S600); and
receiving a 5th Generation, 5G, message service bill sent by the HTTP server according to the first service request (S700);
wherein the first service request carries a HTTP protocol eigenvalue based on a service type of the first service request; and
wherein the 5G message service bill is determined based on a service type of the service request identified by the HTTP protocol eigenvalue of the first service request and a protocol behavior in the service request.

9. A 5th Generation, 5G, message network monitoring system, comprising a memory, a processor, and a computer program stored in the memory and executable by the processor, wherein the computer program, when executed by the processor, causes the processor to perform the service processing method of any one of claims 1 to 7.

10. A terminal device has passed a Generic Bootstrapping Architecture, GBA, authentication, comprising a memory, a processor, and a computer program stored in the memory and executable by the processor, wherein the computer program, when executed by the processor, causes the processor to perform the service processing method of claim 8.

11. A computer-readable storage medium, storing a computer program which, when executed by a processor, causes the processor to perform the service processing method of any one of claims 1 to 7 or the service processing method of claim 8.

## Patentansprüche

1. Dienstverarbeitungsverfahren, das von einem Hypertext Transfer Protocol (HTTP)-Server ausgeführt wird, umfassend:
Erfassen einer ersten Dienstanforderung, die von einem Endgerät gesendet wurde, das eine General Bootstrapping Architecture (GBA)-Authentifizierung bestanden hat (S100); und
Senden einer Nachrichtendienstmeldung der 5. Generation (5G-Nachrichtendienstmeldung) an das Endgerät gemäß der ersten Dienstanforderung (S200);
wobei die erste Dienstanforderung einen HTTP-Protokoll-Eigenwert auf der Grundlage eines Diensttyps der ersten Dienstanforderung enthält; und
wobei die 5G-Nachrichtendienstmeldung auf der Grundlage eines Diensttyps der Dienstanforderung, der durch den HTTP-Protokoll-Eigenwert der ersten Dienstanforderung identifiziert wird, und eines Protokollverhaltens in der Dienstanforderung bestimmt wird.

2. Dienstverarbeitungsverfahren nach Anspruch 1, wobei das Verfahren vor dem Erfassen einer ersten Dienstanforderung, die von einem Endgerät gesendet wurde, das eine GBA-Authentifizierung bestanden hat (S100), umfasst:
Erfassen einer zweiten Dienstanforderung, die von dem Endgerät gesendet wurde, wobei die zweite Dienstanforderung eine Anforderungskennung und Identifikationsinformationen umfasst (S300);
Empfangen einer dritten Dienstanforderung, die von dem Endgerät gesendet wurde, als Reaktion darauf, dass die zweite Dienstanforderung eine Authentifizierungsbedingung erfüllt (S400); und
Senden einer Authentifizierungsmeldung an das Endgerät gemäß der dritten Dienstanforderung (S500),
wobei die Authentifizierungsbedingung darin besteht, dass die Anforderungskennung eine erste Anforderungskennung ist und die Identifizierungsinformationen eine GBA-Kennung sind.

3. Dienstverarbeitungsverfahren nach Anspruch 2, wobei die dritte Dienstanforderung eine Anforderungskennung und Identifizierungsinformationen umfasst, und das Senden einer Authentifizierungsmeldung an das Endgerät gemäß der dritten Dienstanforderung (S500) umfasst:
Senden einer GBA-Authentifizierungserfolgsmeldung an das Endgerät als Reaktion darauf, dass die dritte Dienstanforderung die Authentifizierungsbedingung erfüllt (S510);
oder
Senden einer GBA-Authentifizierungs-Timeout-Meldung an das Endgerät als Reaktion darauf, dass die dritte Dienstanforderung die Authentifizierungsbedingung nicht erfüllt (S520);
oder
als Reaktion darauf, dass die dritte Dienstanforderung die Authentifizierungsbedingung erfüllt und die Identifizierungsinformationen eine Aufgabenkennung (TID, Task Identifier) und Dateilängeninformationen umfassen, Senden einer GBA-Authentifizierungserfolgsmeldung an das Endgerät und Senden einer Dateiübertragungsdienstmeldung an das Endgerät gemäß den Dateilängeninformationen (S530).

4. Dienstverarbeitungsverfahren nach Anspruch 1, wobei die erste Dienstanforderung eine Anforderungskennung und Identifizierungsinformationen umfasst und das Senden einer 5G-Nachrichtendienstmeldung an das Endgerät gemäß der ersten Dienstanforderung (S200) als Reaktion darauf, dass die Anforderungskennung eine erste Anforderungskennung ist und die Identifizierungsinformationen eine TID und Dateilängeninformationen enthalten, umfasst:
Senden einer Dateiübertragungsdienstmeldung an das Endgerät gemäß den Dateilängeninformationen (S210).

5. Dienstverarbeitungsverfahren nach Anspruch 3 oder 4, wobei das Senden einer Dateiübertragungsdienstmeldung an das Endgerät gemäß den Dateilängeninformationen (S210) umfasst:
Senden einer Dienstmeldung ohne Datei-Upload an das Endgerät als Reaktion darauf, dass die Dateilängeninformationen 0 sind und eine dritte Anforderungskennung empfangen wird (S220);
oder
Senden einer Datei-Upload-Meldung an das Endgerät als Reaktion darauf, dass die Dateilängeninformationen größer als 0 sind (S230);
oder
Senden einer Dateiübertragungswiederaufnahmedienstmeldung an das Endgerät als Reaktion darauf, dass die Dateilängeninformationen größer als 0 sind und das Empfangen der dritten Anforderungskennung (S240).

6. Dienstverarbeitungsverfahren nach Anspruch 1, wobei die erste Dienstanforderung eine Anforderungskennung und Identifizierungsinformationen umfasst und das Senden einer 5G-Nachrichtendienstmeldung an das Endgerät gemäß der ersten Dienstanforderung (S200) als Reaktion darauf, dass die Anforderungskennung eine zweite Anforderungskennung ist und die Identifizierungsinformationen eine Datei-Download-Kennung enthalten, umfasst:
als Reaktion darauf, dass die Datei-Download-Kennung eine Kennung einer hochgeladenen Datei enthält, Senden einer Informationsdienstmeldung für eine hochgeladene Datei an das Endgerät (S250);
oder
als Reaktion darauf, dass die Datei-Download-Kennung eine Kennung einer heruntergeladenen Datei enthält, Senden einer Informationsdienstmeldung für eine heruntergeladene Datei an das Endgerät (S260);
oder
Senden einer Datei-Download-Dienstmeldung an das Endgerät als Reaktion darauf, dass die Datei-Download-Kennung nur eine Dateierweiterungskennung enthält (S270).

7. Dienstverarbeitungsverfahren nach Anspruch 1, wobei die erste Dienstanforderung eine Anforderungskennung und Identifizierungsinformationen umfasst, und das Senden einer 5G-Nachrichtendienstmeldung an das Endgerät gemäß der ersten Dienstanforderung (S200) umfasst:
Senden einer GBA-Authentifizierungsdienstmeldung an das Endgerät als Reaktion darauf, dass die Anforderungskennung eine erste Anforderungskennung oder eine zweite Anforderungskennung ist und die Identifizierungsinformationen eine GBA-Kennung und Autorisierungsinformationen enthalten (S280).

8. Dienstverarbeitungsverfahren, das von einem Endgerät durchgeführt wird, das eine Generic Bootstrapping Architecture (GBA)-Authentifizierung bestanden hat, umfassend:
Senden einer ersten Dienstanforderung an einen Hypertext Transfer Protocol (HTTP)-Server (S600); und
Empfangen einer Nachrichtendienstmeldung der 5. Generation (5G-Nachrichtendienstmeldung), die von dem HTTP-Server gemäß der ersten Dienstanforderung gesendet wurde (S700);
wobei die erste Dienstanforderung einen HTTP-Protokoll-Eigenwert auf der Grundlage eines Diensttyps der ersten Dienstanforderung enthält; und
wobei die 5G-Nachrichtendienstmeldung auf der Grundlage eines Diensttyps der Dienstanforderung, der durch den HTTP-Protokoll-Eigenwert der ersten Dienstanforderung identifiziert wird, und eines Protokollverhaltens in der Dienstanforderung bestimmt wird.

9. Überwachungssystem für ein Nachrichtennetzwerk der 5. Generation (5G-Nachrichtennetzwerk), umfassend einen Speicher, einen Prozessor und ein Computerprogramm, das in dem Speicher gespeichert ist und von dem Prozessor ausgeführt werden kann, wobei das Computerprogramm, wenn es von dem Prozessor ausgeführt wird, den Prozessor dazu veranlasst, das Dienstverarbeitungsverfahren nach einem der Ansprüche 1 bis 7 durchzuführen.

10. Endgerät, das eine Generic Bootstrapping Architecture (GBA)-Authentifizierung bestanden hat, umfassend einen Speicher, einen Prozessor und ein Computerprogramm, das in dem Speicher gespeichert ist und von dem Prozessor ausgeführt werden kann, wobei das Computerprogramm, wenn es von dem Prozessor ausgeführt wird, den Prozessor dazu veranlasst, das Dienstverarbeitungsverfahren nach Anspruch 8 durchzuführen.

11. Computerlesbares Speichermedium, das ein Computerprogramm speichert, das, wenn es von einem Prozessor ausgeführt wird, den Prozessor dazu veranlasst, das Dienstverarbeitungsverfahren nach einem der Ansprüche 1 bis 7 oder das Dienstverarbeitungsverfahren nach Anspruch 8 durchzuführen.

## Revendications

1. Procédé de traitement de service, effectué par un serveur de protocole de transfert hypertexte (en Anglais « Hypertext Transfer Protocol » pour HTTP), comprenant :
acquérir une première demande de service envoyée par un dispositif terminal ayant passé une authentification (S100) d'architecture d'amorçage générale (en Anglais «General Bootstrapping Architecture» pour GBA) ; et
envoyer une facture de service de messagerie de 5e génération, 5G, au dispositif terminal en fonction de la première demande de service (S200) ;
dans lequel la première demande de service porte une valeur propre de protocole HTTP basée sur un type de service de la première demande de service ; et
dans lequel la facture de service de messagerie 5G est déterminée sur la base d'un type de service de la demande de service identifié par la valeur propre du protocole HTTP de la première demande de service et d'un comportement de protocole dans la demande de service.

2. Procédé de traitement de service selon la revendication 1, dans lequel avant d'acquérir une première demande de service envoyée par un dispositif terminal ayant passé une authentification GBA (S100), le procédé comprend :
acquérir une deuxième demande de service envoyée par le dispositif terminal, dans lequel la deuxième demande de service comprend un identifiant de demande et des informations d'identification (S300) ;
recevoir une troisième demande de service envoyée par le dispositif terminal, en réponse à la deuxième demande de service satisfaisant à une condition d'authentification (S400) ; et
envoyer une facture d'authentification au dispositif terminal en fonction de la troisième demande de service (S500),
dans lequel la condition d'authentification est que l'identifiant de demande est un premier identifiant de demande, et les informations d'identification sont un identifiant GBA.

3. Procédé de traitement de service selon la revendication 2, dans lequel la troisième demande de service comprend un identifiant de demande et des informations d'identification, et l'envoi d'une facture d'authentification au dispositif terminal selon la troisième demande de service (S500) comprend :
envoyer une facture de succès d'authentification GBA au dispositif terminal en réponse à la troisième demande de service satisfaisant à la condition d'authentification (S510) ;
ou
envoyer une facture de délai d'authentification GBA au dispositif terminal en réponse à la troisième demande de service ne satisfaisant pas la condition d'authentification (S520) ;
ou
en réponse à la troisième demande de service satisfaisant à la condition d'authentification et aux informations d'identification comprenant un identifiant de tâche (en Anglais « Task Identifier » pour TID) et des informations de longueur de fichier, envoyer une facture de succès d'authentification GBA au dispositif terminal et envoyer une facture de service de transfert de fichier au dispositif terminal selon les informations de longueur de fichier (S530).

4. Procédé de traitement de service selon la revendication 1, dans lequel la première demande de service comprend un identifiant de demande et des informations d'identification, et en réponse au fait que l'identifiant de demande est un premier identifiant de demande et que les informations d'identification portent un TID et des informations de longueur de fichier, l'envoi d'une facture de service de messagerie 5G au dispositif terminal selon la première demande de service (S200) comprend :
envoyer une facture de service de transfert de fichier au dispositif terminal en fonction des informations de longueur de fichier (S210).

5. Procédé de traitement de service selon la revendication 3 ou 4, dans lequel l'envoi d'une facture de service de transfert de fichier au dispositif terminal selon les informations de longueur de fichier (S210) comprend :
envoyer une facture de service sans téléchargement de fichier vers le dispositif terminal, en réponse aux informations de longueur de fichier étant 0 et recevant un troisième identifiant de demande (S220) ;
ou
envoyer une facture de téléchargement de fichier au dispositif terminal en réponse à des informations de longueur de fichier supérieures à 0 (S230) ;
ou
envoyer une facture de service de reprise de transfert de fichier au dispositif terminal en réponse aux informations de longueur de fichier étant supérieures à 0 et recevoir le troisième identifiant de demande (S240).

6. Procédé de traitement de service selon la revendication 1, dans lequel la première demande de service comprend un identifiant de demande et des informations d'identification, et en réponse au fait que l'identifiant de demande est un deuxième identifiant de demande et que les informations d'identification portent un identifiant de téléchargement de fichier, l'envoi d'une facture de service de messagerie 5G au dispositif terminal selon la première demande de service (S200) comprend :
en réponse à l'identifiant de téléchargement de fichier portant un identifiant d'un fichier ayant été téléchargé, envoyer, au dispositif terminal, une facture de service d'information de fichier téléchargé (S250) ;
ou
en réponse à l'identifiant de téléchargement de fichier portant un identifiant d'un fichier ayant été téléchargé, envoyer, au dispositif terminal, une facture de service d'information de fichier téléchargé (S260) ;
ou
envoyer une facture de service de téléchargement de fichier au dispositif terminal en réponse à l'identifiant de téléchargement de fichier portant uniquement un identifiant d'extension de fichier (S270).

7. Procédé de traitement de service selon la revendication 1, dans lequel la première demande de service comprend un identifiant de demande et des informations d'identification, et l'envoi d'une facture de service de messagerie 5G au dispositif terminal selon la première demande de service (S200) comprend :
envoyer une facture de service d'authentification GBA au dispositif terminal en réponse au fait que l'identifiant de demande est un premier identifiant de demande ou un deuxième identifiant de demande et que les informations d'identification portent un identifiant GBA et des informations d'autorisation (S280).

8. Procédé de traitement de service, effectué par un dispositif terminal qui a passé une authentification d'architecture d'amorçage générique, GBA, comprenant :
envoyer une première demande de service à un serveur HTTP (Hypertext Transfer Protocol) (S600) ; et
recevoir une facture de service de messagerie de 5e génération, 5G, envoyée par le serveur HTTP en fonction de la première demande de service (S700) ;
dans lequel la première demande de service porte une valeur propre de protocole HTTP basée sur un type de service de la première demande de service ; et
dans lequel la facture de service de messagerie 5G est déterminée sur la base d'un type de service de la demande de service identifié par la valeur propre du protocole HTTP de la première demande de service et d'un comportement de protocole dans la demande de service.

9. Système de surveillance de réseau de messagerie de 5e génération, 5G, comprenant une mémoire, un processeur et un programme informatique stocké dans la mémoire et exécutable par le processeur, dans lequel le programme informatique, lorsqu'il est exécuté par le processeur, amène le processeur à exécuter le procédé de traitement de service selon l'une quelconque des revendications 1 à 7.

10. Dispositif terminal qui a passé une authentification d'architecture d'amorçage générique, GBA, comprenant une mémoire, un processeur et un programme informatique stocké dans la mémoire et exécutable par le processeur, dans lequel le programme informatique, lorsqu'il est exécuté par le processeur, amène le processeur à exécuter le procédé de traitement de service selon la revendication 8.

11. Support de stockage lisible par ordinateur, stockant un programme informatique qui, lorsqu'il est exécuté par un processeur, amène le processeur à exécuter le procédé de traitement de service selon l'une quelconque des revendications 1 à 7 ou le procédé de traitement de service selon la revendication 8.
